# EUROPÄISCHE PATENTANMELDUNG

(11) **EP 2 522 821 A1**
(43) Veröffentlichungstag der Anmeldung: **14.11.2012**
(21) Anmeldenummer: 12002643.0
(22) Anmeldetag: 16.04.2012
(51) Int. Cl.: F01N 3/021, F01N 3/023, F02B 37/00, F01N 3/033, B60K 5/04, B60K 13/04

(54) **Abgasreinigungseinrichtung für eine Brennkraftmaschine, Abgasanlage, Brennkraftanlage und Kraftfahrzeug**

(30) Priorität: 11.05.2011 DE 102011101128
(71) Anmelder: Volkswagen Aktiengesellschaft, 38440 Wolfsburg (DE)
(72) Erfinder: Pott, Ekkehard, Dr., 38518 Gifhorn (DE); Hahne, Bernd, 38126 Braunschweig (DE)

(57) **Zusammenfassung**

Die Erfindung betrifft eine Abgasreinigungseinrichtung für eine Brennkraftmaschine, insbesondere für einen Dieselmotor, die ein Verbindungselement (11) zur mechanischen Kopplung mit einem Abgas-Turbolader (1) und einen Partikelfilter (14) umfasst, der mit dem Verbindungselement (11) strömungstechnisch verbunden ist; sowie eine Abgasanlage, eine Brennkraftanlage und ein Kraftfahrzeug.

Es ist vorgesehen, dass die Länge des Stromfadens (16) zwischen dem Verbindungselement (11) und dem Partikelfilter (14) maximal 600 mm beträgt.

## Beschreibung

Die vorliegende Erfindung betrifft eine Abgaseinrichtung für eine Brennkraftmaschine, insbesondere für einen Dieselmotor, sowie eine Abgasanlage, welche die erfindungsgemäße Abgasreinigungseinrichtung umfasst, und eine Brennkraftanlage, die wiederum die Abgasanlage aufweist. Weiterhin betrifft die vorliegende Erfindung ein Kraftfahrzeug, welches die erfindungsgemäße Brennkraftanlage umfasst.

Bei modernen Kraftfahrzeugen, insbesondere dieselmotorisch angetriebene Kraftfahrzeugen, ist die Verwendung von Partikelfiltern bekannt. In diesen Partikelfiltern lagern sich gefilterte Partikel an der Oberfläche beziehungsweise im Inneren der Filterwand an, wodurch ein durch den Abgasvolumenstrom erzeugter Differenzdruck über dem Filter ansteigt. Bei Erreichung eines bestimmten Schwellwertes, der an die im Partikelfilter eingelagerte Rußmasse gekoppelt ist, ist eine Regeneration des Filters einzuleiten.

Diese Regeneration erfolgt üblicherweise durch Verbrennung der eingelagerten Partikel. Dadurch wird ein zu hoher Abgasgegendruck, bewirkt durch die Partikelbeladung im Partikelfilter, verhindert. Üblicherweise findet die Regeneration zyklisch, in Abhängigkeit von der jeweiligen Fahrleistung und vom Fahrverhalten, statt. Zur Verbrennung der angesammelten Partikel wird eine bestimmte Temperatur benötigt. Diese wird durch Nacheinspritzung von Treibstoff und katalytischer Reaktion auf dem Partikelfilter realisiert. Nach dem Zünden des Rußes setzt, bei entsprechenden Temperaturen, ein selbständiges weiteres Abbrennen der Rußpartikel ein.

Insbesondere bei Dieselmotoren, deren Abgastemperaturen je nach Fahrbetrieb deutlich unter dem Zündpunkt der Rußpartikel liegen können, ist eine derartige Nacheinspritzung von Treibstoff zur Temperaturanhebung notwendig.

Aufgeladene Dieselmotoren weisen in modernen Ausführungsformen eine Abgasturbo-Aufladung auf. Diese kann durch Turbolader mit variabler Turbinengeometrie ausgeführt sein, wobei über die Schaufelstellung sowohl der Abgasgegendruck als auch die Anströmung der Turbine beeinflusst werden kann. Derartige Abgasturbolader können schon bei kleinen Abgasmassenströmen einen hohen Ladedruck entwickeln. Die Temperaturanhebung im Partikelfilter zwecks Regeneration des Partikelfilters kann durch diese variablen Abgasturbolader mittels Schaufelverstellung erreicht werden. Derartig wird eine Gegendruckerhöhung im Abgas realisiert, so dass eine Temperaturerhöhung im Dieselpartikelfilter energetisch effizienter realisierbar ist.

Aus der DE 10 2009 027 113 A1 ist ein System und ein Verfahren zur Verbesserung der Abgasrückführung für einen turboaufgeladenen Motor bekannt. Im Abgassystem des turboaufgeladenen Motors wird vorzugsweise ein Turbolader mit verstellbarer Turbinengeometrie eingesetzt. Alternativ kann auch ein so genannter Wastegate-Turbolader eingesetzt werden. Die Beeinflussung der Temperatur im Partikelfilter zwecks Regeneration wird durch die Steuerung eines Abgasrückführungsstroms durch den Partikelfilter realisiert. Dies setzt eine entsprechende Abgasrückführungsmöglichkeit sowie eine komplexe Steuerung der Abgasströme voraus. Der Einsatz von Turboladern mit verstellbarer Turbinengeometrie bedingt zusätzlich höhere Herstellungskosten sowie gegebenenfalls einen höheren Wartungsaufwand.

Der Erfindung liegt somit die Aufgabe zugrunde, eine Abgasreinigungseinrichtung für eine Brennkraftmaschine, eine Abgasanlage sowie eine Brennkraftanlage und ein Kraftfahrzeug zur Verfügung zu stellen, welche in einfacher, zuverlässiger und kostengünstiger Weise in der Lage sind, bei Einhaltung der zulässigen Emissionswerte die Regenerierung des Partikelfilters möglichst effizient zu erreichen.

Diese Aufgabe wird durch die erfindungsgemäße Abgasreinigungseinrichtung nach Anspruch 1, durch die erfindungsgemäße Abgasanlage nach Anspruch 6, durch die erfindungsgemäße Brennkraftanlage nach Anspruch 9 sowie durch das erfindungsgemäße Kraftfahrzeug nach Anspruch 12 gelöst. Vorteilhafte Ausgestaltungen der Abgasreinigungseinrichtung sind in den Unteransprüchen 2 bis 5 angegeben. Vorteilhafte Ausgestaltungen der Abgasanlage sind in den Unteransprüchen 7 und 8 angegeben. Vorteilhafte Ausgestaltungen der Brennkraftanlage sind in den Unteransprüchen 10 und 11 angegeben. Vorteilhafte Ausgestaltungen des Kraftfahrzeugs sind in den Unteransprüchen 13 bis 15 angegeben.

Erfindungsgemäß wird eine Abgasreinigungseinrichtung für eine Brennkraftmaschine, insbesondere für einen Dieselmotor, zur Verfügung gestellt, die ein Verbindungselement zur mechanischen Kopplung mit einem Abgas-Turbolader und einen Partikelfilter umfasst, der mit dem Verbindungselement strömungstechnisch verbunden ist, wobei die Länge des Stromfadens zwischen dem Verbindungselement und dem Partikelfilter maximal 600 mm beträgt. Der Partikelfilter ist bei Anwendung der Abgasreinigungseinrichtung an einem Dieselmotor ein Dieselpartikelfilter. Die mechanische Kopplung der Abgasreinigungseinrichtung mit dem Abgasturbolader erfolgt vorzugsweise unmittelbar, das heißt als ein direkter mechanischer Anschluss. Das Verbindungselement kann dabei zum Beispiel ein Flansch oder ein gleich wirkendes mechanisches Verbindungsmittel sein. Die Länge des Stromfadens wird von dem Punkt des Verbindungselementes gemessen, der im Stromfaden den größten Abstand vom Partikelfilter aufweist und demzufolge im Stromfaden den geometrischen Punkt der Koppelstelle an den Abgasturbolader definiert. Von diesem Punkt ausgehend, beträgt die Länge des Stromfadens maximal 600 mm bis zu dem Punkt des Partikelfilters, der sich im Stromfaden am weitesten stromaufwärts befindet. Das Verbindungselement und der Partikelfilter sind dabei strömungstechnisch miteinander zum Beispiel über eine Verbindungsleitung in Form eines Rohres verbunden, wobei die Verbindungsleitung zweidimensional oder auch dreidimensional gebogen sein kann. Der Stromfaden ist dabei der Bereich einer laminaren Strömung des Abgases, bei der sowohl der Massenstrom als auch die Dichte, der Druck, die Geschwindigkeit, im Wesentlichen die Temperatur und die Viskosität des Abgases konstant sind. Bei einem geraden, glatten Verbindungsrohr zwischen dem Verbindungselement und dem Partikelfilter wäre dies zumindest der zentrale Bereich dieses Rohres. Insbesondere sollte die Länge des Stromfadens zwischen dem Verbindungselement und dem Partikelfilter maximal 550 mm, bevorzugt maximal 350 mm und möglichst nicht mehr als 250 mm betragen.

Der Vorteil dieser erfindungsgemäßen Abgasreinigungseinrichtung liegt insbesondere darin, dass die Temperatur des Abgases hinter dem Abgasturbolader möglichst optimal zur Temperaturerhöhung im Partikelfilter zwecks periodischer Regeneration ausgenutzt wird. Die Wärmeverluste an die Umgebung beziehungsweise Temperaturverluste entstehen größtenteils durch Strahlung und Konvektion an der Abgasführung zwischen dem Abgasturbolader und dem beabstandeten Partikelfilter und nehmen mit geringerer Länge des Stromfadens ab. Durch die Temperatur des Abgases wird die Erwärmung, die durch katalytische Reaktion bei Nacheinspritzung im Partikelfilter und/oder einem vorgeschalteten Oxidationskatalysator entstehen soll, unterstützt. Demzufolge ist weniger oder sogar gar keine Nacheinspritzung im Partikelfilter notwendig. Bei der letztgenannten Eliminierung der Nacheinspritzung ist demzufolge auch keine Einrichtung zur Nacheinspritzung mehr erforderlich.

Zwecks optimaler Ausnutzung der Wärme der Brennkraftmaschine im Abgasturbolader ist vorgesehen, dass die Länge des Stromfadens zwischen dem Verbindungselement und dem Partikelfilter nicht mehr als 200 mm, bevorzugt weniger als 100 mm beträgt. Insbesondere bei einer derartigen Ausgestaltung ist eine effiziente Unterstützung der Temperaturanhebung im Partikelfilter durch Minderung der Wärmeverluste zwischen Turbolader und Partikelfilter möglich.

In einer weiteren vorteilhaften Ausgestaltung der erfindungsgemäßen Abgasreinigungseinrichtung weist diese einen Oxidationskatalysator auf. Bevorzugt ist dieser Oxidationskatalysator in Strömungsrichtung dem Partikelfilter vorgeschaltet und/oder in einer den Oxidationskatalysator sowie den Partikelfilter umfassenden Abgasreinigung untergebracht, die somit ein kompaktes Modul ausbildet.

In dieser Ausführungsform ist vorteilhafterweise vorgesehen, dass die Länge des Stromfadens zwischen dem Verbindungselement und dem Oxidationskatalysator maximal 500 mm beträgt. Insbesondere sollte die Länge des Stromfadens zwischen dem Verbindungselement und dem Oxidationskatalysator höchstens 450 mm, bevorzugt höchstens 350 mm und optimalerweise höchstens 250 mm betragen. Der Vorteil dieser Ausgestaltung liegt darin, dass der Oxidationskatalysator Wärme der Brennkraftmaschine zur Erreichung seiner Anspringtemperatur von 150 °C bis 170 °C nutzen kann, um seine volle katalytische Wirkung zu entfalten. Dabei schließt der Partikelfilter vorteilhafterweise unmittelbar an den Oxidationskatalysator an, so dass die von der Brennkraftmaschine in den Oxidationskatalysator geleitete Wärme zumindest teilweise auch im Partikelfilter zwecks Regeneration verwertet werden kann. Außerdem kann die beim Betrieb des Oxidationskatalysators entstehende Wärme zur Temperaturerhöhung im Partikelfilter zwecks periodischer Regeneration ausgenutzt werden.

Die Länge des Stromfadens zwischen dem Verbindungselement und dem Oxidationskatalysator sollte dabei möglichst 200 mm nicht überschreiten. Insbesondere sollte die Länge des Stromfadens zwischen dem Verbindungselement und dem Oxidationskatalysator maximal 130 mm und zur besonders effizienten Wärmeausnutzung maximal 60 mm betragen.

Zur Lösung der Aufgabe wird außerdem eine Abgasanlage zur Verfügung gestellt, welche eine erfindungsgemäße Abgasreinigungseinrichtung und weiterhin einen Abgas-Turbolader umfasst, an den das Verbindungselement angeschlossen ist. Das heißt, dass der Abgas-Turbolader der Abgasanlage strömungstechnisch mit dem Verbindungselement und demzufolge mit dem Partikelfilter und gegebenenfalls mit dem Oxidationskatalysator verbunden ist. Erfindungsgemäß beträgt somit die Länge des Stromfadens zwischen dem Abgas-Turbolader, an den das Verbindungselement angeschlossen ist, und dem Partikelfilter maximal 600 mm und bevorzugt maximal 550 mm und in besonders bevorzugten Ausführungsformen maximal 250 mm sowie zur optimalen. Verwertung der Verbrennungswärme maximal 100 mm. Der eingesetzte Abgas-Turbolader kann konstruktiv relativ einfach ausgeführt sein, da er aufgrund der Nutzung der Wärme der Brennkraftmaschine im Partikelfilter nicht unbedingt dazu eingerichtet sein muss, eine Gegendruckerhöhung zwecks Temperaturanhebung im Partikelfilter zu realisieren.

Ein solcher Abgas-Turbolader kann ein Turbolader mit unveränderlicher Turbinengeometrie, wie zum Beispiel ein so genannter Wastegate-Turbolader sein. Ein solcher Wastegate-Turbolader weist zur Regulierung der maximalen Drehzahl eine Bypassklappe auf, mit der je nach Stellung der durch den Turbolader strömende Abgasmassenstrom beeinflussbar ist. Ein solcher Turbolader ist sehr kostengünstig und störungsunanfällig. Das heißt, dass bei der erfindungsgemäßen motornahen Abgasreinigung auf Abgastemperaturanhebung durch Gegendruckerhöhung verzichtet werden kann, da von der Brennkraftmaschine generierte Wärme zur Regenerierung des Dieselpartikelfilters eingesetzt wird. Demzufolge kann auch ein kostengünstigerer Wastegate-Turbolader in der Abgasanlage eingesetzt werden.

Außerdem kann vorgesehen sein, dass die Abgasanlage eine Niederdruck-Abgasrückführung aufweist. Die Niederdruck-Abgasrückführung ist vorzugsweise stromabwärts des Dieselpartikelfilters mit diesem sowie mit der Luftansaugung stromauf des Verdichters strömungstechnisch zu verbinden. Durch die gründliche Reinigung des Partikelfilters kann der Betrieb der Niederdruck-Abgasrückführung zuverlässiger realisiert werden, da eine Partikelbelastung der Niederdruck-Abgasrückführung stark vermindert beziehungsweise ausgeschlossen werden kann.

Erfindungsgemäß wird außerdem eine Brennkraftanlage zur Verfügung gestellt, welche eine Brennkraftmaschine und eine erfindungsgemäße Abgasanlage umfasst. Die Brennkraftmaschine ist dabei vorzugsweise ein quer in ein Kraftfahrzeug einzubauender Motor. Das heißt, dass der Motor hinsichtlich seiner Anschlüsse und Aufhängungen derart eingerichtet ist, dass er quer in ein Personenkraftwagen einbaubar ist. Üblicherweise haben Personenkraftwagen mit quer eingebautem Motor eine geringere Leistung und sind insgesamt leichter als Personenkraftwagen mit längs eingebautem Motor. Beim vorgeschlagenen Einsatz eines Turboladers mit unveränderlicher Turbinengeometrie kann der Ladedruck und das Drehmoment bei kleinen Drehzahlen 2000 min⁻¹ nicht derart hoch eingestellt werden, wie es mit einem Turbolader mit veränderlicher Turbinengeometrie möglich wäre. Dies macht sich bei leichteren Fahrzeugen hinsichtlich der Gesamtleistung weniger bemerkbar als bei einem schwereren Fahrzeug, welches üblicherweise einen längs eingebauten Motor aufweist. Demzufolge ist die erfindungsgemäße Abgasanlage vorzugsweise in eine Brennkraftanlage zu integrieren, deren Motor quer in ein Kraftfahrzeug einzubauen beziehungsweise eingebaut ist.

In vorteilhafter Ausgestaltung der erfindungsgemäßen Brennkraftanlage umfasst diese weiterhin eine Steuerungseinrichtung, mit der in Bezug zur Stellung einer Kurbelwelle der Brennkraftmaschine variable Ventilsteuerzeiten realisierbar sind. Dadurch lässt sich die Temperatur der Abgase beeinflussen und somit zielgerichtet eine Temperatureinstellung im Partikelfilter zur Regeneration und/oder im Oxidationskatalysator zwecks Verbesserung seines Anspringverhaltens realisieren.

Ein weiterer Aspekt der vorliegenden Erfindung ist ein Kraftfahrzeug, insbesondere ein dieselmotorisch angetriebenes Kraftfahrzeug, welches die erfindungsgemäße Brennkraftanlage aufweist.

Vorzugsweise ist dieses Kraftfahrzeug derart ausgestaltet, dass es im Neuen Europäischen Fahrzyklus NOₓ-Endrohremissionen von weniger als 350 mg/km aufweist. Vorzugsweise sollte es weniger als 180 mg/km, insbesondere weniger als 125 mg/km beziehungsweise weniger als 105 mg/km aufweisen. Idealerweise betragen die Endrohremissionen weniger als 80 mg/km.

Alternativ oder hinzukommend kann vorgesehen sein, dass das erfindungsgemäße Kraftfahrzeug im Neuen Europäischen Fahrzyklus Partikelrohemissionen von maximal 250 mg/km aufweist. Vorzugsweise sollte das Fahrzeug maximal 100 mg/km und wünschenswerter Weise nicht mehr als 50 mg/km beziehungsweise 30 mg/km aufweisen. Idealerweise wird ein Wert von 25 mg/km Partikelrohemissionen nicht überschritten. Die genannten Werte beziehen sich auf die Ermittlung der NOₓ-Endrohremissionen und der Partikelrohemissionen im Neuen Europäischen Fahrzyklus, der in einer dem bekannten Fachmann zugänglichen Richtlinie des Rates 70/220/EWG vom 20. März 1970 definiert ist. Das erfindungsgemäße Kraftfahrzeug, welches vorzugsweise einen quer eingebauten Motor aufweist, sollte eine spezifische Leistung von nicht mehr als 50 kW/dm³ Motorhubraum aufweisen.

Durch die erfindungsgemäße Ausnutzung der Verbrennungswärme im Motor zur Regenerierung des Partikelfilters sind weitere Maßnahmen zur Temperaturanhebung im Partikelfilter in nur verringertem Maße durchzuführen oder sogar, je nach Regenerationsbedarf, überflüssig. Insbesondere wird dadurch die Anwendung eines konstruktiv einfachen Wastegate-Abgasturboladers ermöglicht, der mit geringen Herstellungs- und Wartungskosten integriert und genutzt werden kann.

Die vorliegende Erfindung wird im Folgenden anhand der in den beiliegenden Zeichnungen dargestellten Ausführungsbeispiele beschrieben. Es zeigen:
- Figur 1: eine erfindungsgemäße Abgasreinigungseinrichtung in einer ersten Ausführungsform;
- Figur 2: eine erfindungsgemäße Abgasreinigungseinrichtung in einer zweiten Ausführungsform und
- Figur 3: ein erfindungsgemäßes Kraftfahrzeug.

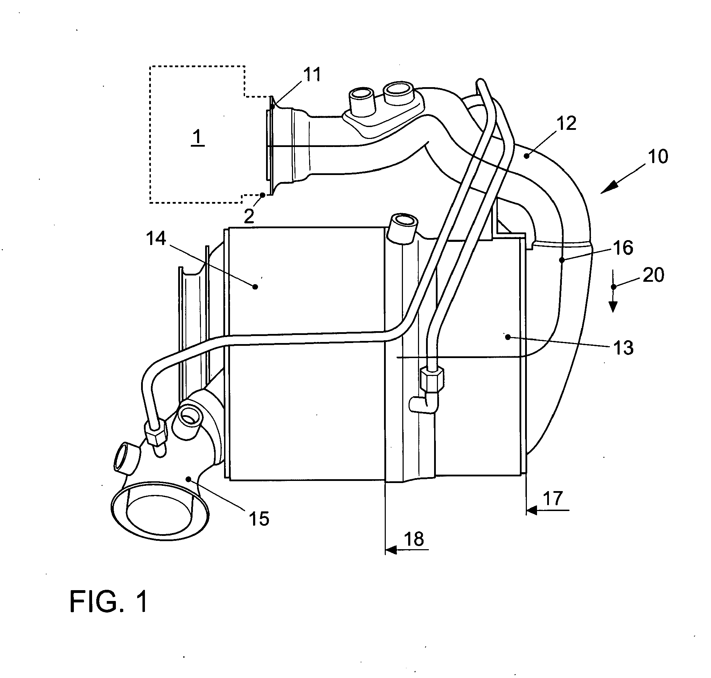

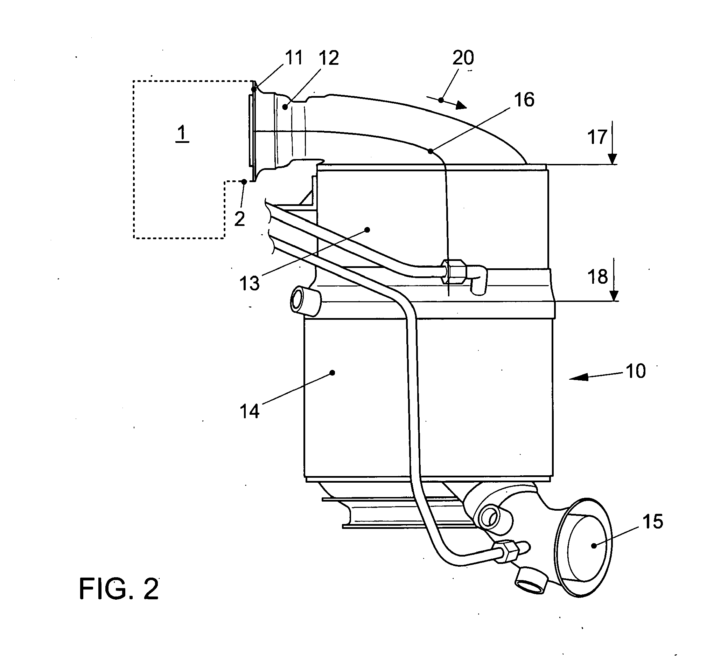

Zunächst wird Bezug genommen auf die in den Figuren 1 und 2 dargestellten unterschiedlichen Ausführungsformen der erfindungsgemäßen Abgasreinigungseinrichtung.

Bei beiden Ausführungsformen ist eine Abgasreinigung 10 an einem nur angedeuteten Turbolader 1 mittels eines Verbindungselements 11 angeschlossen. Das Verbindungselement 11 ist über eine in Figur 1 dreidimensional gebogene Leitung oder in Figur 2 relativ kurze, gerade Leitung 12 an einen Oxidationskatalysator 13 gekoppelt. In Strömungsrichtung 20 schließt sich an den Oxidationskatalysator 13 ein Dieselpartikelfilter 14 an. An diesen Dieselpartikelfilter 14 wiederum schließt sich der Auslass 15 an. An den Auslass 15 kann zum Beispiel eine (nicht dargestellte) Niederdruck-Abgasrückführung angeschlossen sein.

Durch das Verbindungselement 11, die Leitung 12 sowie auch durch den Oxidationskatalysator 13 verläuft ein Stromfaden 16, dessen Massenstrom hinsichtlich der Dichte, des Drucks, der Geschwindigkeit, im Wesentlichen der Temperatur und der Viskosität des Abgases konstant ist. In diesem Stromfaden beträgt der Abstand 17 zwischen dem Turboladerausgang 2 beziehungsweise zwischen dem Punkt des Verbindungselementes 11 im Stromfaden 16, der am weitesten stromaufwärts liegt, zum Eingang im Oxidationskatalysator maximal 500 mm.

Der Abstand 18 zwischen dem Turboladerausgang 2 beziehungsweise dem Punkt des Verbindungselementes 11, der im Stromfaden 16 am weitesten stromaufwärts gelegen ist, zum Dieselpartikelfilter beträgt erfindungsgemäß maximal 600 mm. Durch diese kurze Entfernung zwischen dem Turbolader 1, in dem sich Abgas mit sehr hohen Temperaturen befindet, bis zum Dieselpartikelfilter 14 wird gewährleistet, dass vom Abgas im Turbolader 1 ein derart geringer Wärmeverlust bis zum Dieselpartikelfilter 14 auftritt, dass in diesem effizient eine Temperaturanhebung zwecks Unterstützung oder Realisierung der Regenerierung erfolgt.

Dabei ist die Erfindung nicht auf die dargestellte Anordnung des Oxidationskatalysators 17 eingeschränkt, sondern es kann davon abweichend auch vorgesehen sein, dass die erfindungsgemäße Abgasreinigung 10 lediglich den Dieselpartikelfilter 14 aufweist, der die erfindungsgemäße geringe Entfernung zum Turboblader 1 aufweist.

Aus dem Dieselpartikelfilter 14 kann das gefilterte Abgas zu einer nicht dargestellten Niederdruck-Abgasrückführung gelangen, die aufgrund der zuverlässigen Regenerierung des Dieselpartikelfilters nicht mit Rußpartikeln belastet wird.

Dadurch, dass die Temperaturanhebung im Dieselpartikelfilter durch die Abwärme des Verbrennungsmotors unterstützt beziehungsweise realisiert wird, muss der Turbolader 1 nicht derart ausgestaltet sein, dass er aufgrund einer Verstellung seiner Turbinengeometrie einen Gegendruck zwecks Temperaturerhöhung im Dieselpartikelfilter 14 erwirken kann. Stattdessen lässt sich ein kostengünstiger so genannter Wastegate-Turbolader einsetzten.

Die in Figur 1 dargestellte Ausführungsform der erfindungsgemäßen Abgasreinigungseinrichtung eignet sich insbesondere zur liegenden Anordnung in einem Kraftfahrzeug, wobei die dreidimensionale Formung der Leitung 12 zur Verhinderung von Kollisionen mit weiteren, im Motorraum eines Kraftfahrzeuges angeordneten Komponenten dient.

Die in Figur 2 dargestellte Ausführungsvariante dient insbesondere zur stehenden Anordnung der Abgasreinigungseinrichtung, bei der die Leitung 12 entsprechend kurz ausführbar ist, da in dieser Ausrichtung der Abgasreinigungseinrichtung bei der unmittelbaren Anordnung am Turbolader 1 günstigere Bauraumverhältnisse herrschen.

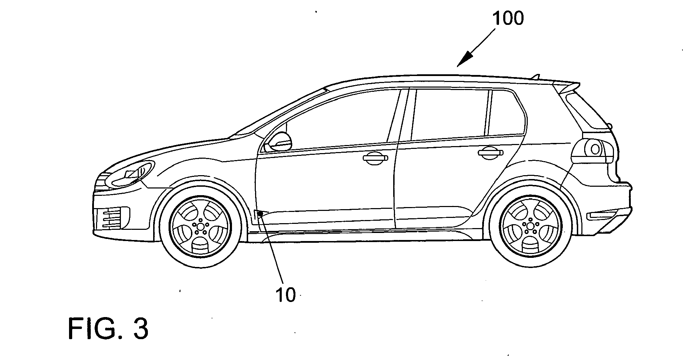

In Figur 3 ist ein erfindungsgemäßes Kraftfahrzeug 100 dargestellt, wobei angedeutet ist, dass sich die erfindungsgemäße Abgasreinigungseinrichtung zumindest in der Nähe des Motorraumes des Kraftfahrzeuges 100 befindet.

### Bezugszeichenliste

- 1: Turbolader
- 2: Turboladerausgang
- 10: Abgasreinigung
- 11: Verbindungselement
- 12: Leitung
- 13: Oxidationskatalysator
- 14: Dieselpartikelfilter
- 15: Auslass
- 16: Stromfaden
- 17: Abstand zum Oxidationskatalysator
- 18: Abstand zum Dieselpartikelfilter
- 20: Strömungsrichtung
- 100: Kraftfahrzeug

## Patentansprüche

1. Abgasreinigungseinrichtung für eine Brennkraftmaschine, insbesondere für einen Dieselmotor, die ein Verbindungselement (11) zur mechanischen Kopplung mit einem Abgas-Turbolader (1) und einen Partikelfilter (14) umfasst, der mit dem Verbindungselement (11) strömungstechnisch verbunden ist, **dadurch gekennzeichnet, dass** die Länge des Stromfadens (16) zwischen dem Verbindungselement (11) und dem Partikelfilter (14) maximal 600 mm beträgt.

2. Abgasreinigungseinrichtung nach Anspruch 1, **dadurch gekennzeichnet, dass** die Länge des Stromfadens (16) zwischen dem Verbindungselement (11) und dem Partikelfilter (14) maximal 200 mm beträgt.

3. Abgasreinigungseinrichtung nach einem der vorhergehenden Ansprüche, **dadurch gekennzeichnet, dass** sie weiterhin einen Oxidationskatalysator (13) aufweist.

4. Abgasreinigungseinrichtung nach Anspruch 3, **dadurch gekennzeichnet, dass** die Länge des Stromfadens (16) zwischen dem Verbindungselement (11) und dem Oxidationskatalysator (13) maximal 500 mm beträgt.

5. Abgasreinigungseinrichtung nach Anspruch 4, **dadurch gekennzeichnet, dass** die Länge des Stromfadens (16) zwischen dem Verbindungselement (11) und dem Oxidationskatalysator (13) maximal 200 mm beträgt.

6. Abgasanlage, umfassend eine Abgasreinigungseinrichtung gemäß einem der Ansprüche 1 bis 5, **dadurch gekennzeichnet, dass** sie weiterhin einen Abgas-Turbolader (1) umfasst, an den das Verbindungselement (11) angeschlossen ist.

7. Abgasanlage nach Anspruch 6, **dadurch gekennzeichnet, dass** der Abgas-Turbolader (1) ein Turbolader mit unveränderlicher Turbinengeometrie ist.

8. Abgasanlage nach einem der Ansprüche 6 und 7, **dadurch gekennzeichnet, dass** sie eine Niederdruck-Abgasrückführung aufweist.

9. Brennkraftanlage, umfassend eine Brennkraftmaschine und eine Abgasanlage nach einem der Ansprüche 6 bis 8.

10. Brennkraftanlage nach Anspruch 9, **dadurch gekennzeichnet, dass** die Brennkraftmaschine ein quer in ein Kraftfahrzeug (100) einzubauender Motor ist.

11. Brennkraftanlage nach einem der Ansprüche 9 und 10, **dadurch gekennzeichnet, dass** sie eine Steuerungseinrichtung umfasst, mit der in Bezug zur Stellung einer Kurbelwelle der Brennkraftmaschine variable Ventilsteuerzeiten realisierbar sind.

12. Kraftfahrzeug (100), insbesondere dieselmotorisch angetriebenes Kraftfahrzeug, umfassend die Brennkraftanlage nach einem der Ansprüche 9 bis 11.

13. Kraftfahrzeug (100) nach Anspruch 12, **dadurch gekennzeichnet, dass** es im Neuen Europäischen Fahrzyklus NOₓ-Endrohremissionen von weniger als 350 mg/km aufweist.

14. Kraftfahrzeug (100) nach Anspruch 12, **dadurch gekennzeichnet, dass** es im Neuen Europäischen Fahrzyklus NOₓ-Endrohremissionen von weniger als 125 mg/km aufweist.

15. Kraftfahrzeug (100) nach einem der Ansprüche 12 bis 14, **dadurch gekennzeichnet, dass** es im Neuen Europäischen Fahrzyklus Partikelrohemissionen von maximal 250 mg/km aufweist.
